Europäisches Patentamt

European Patent Office

Office européen des brevets

(11) Publication number: **0 113 035 B1**

# EUROPEAN PATENT SPECIFICATION

(45) Date of publication of patent specification: **27.03.91**    (51) Int. Cl.5: **H02G 7/12, H02G 7/14**

(21) Application number: **83111769.2**

(22) Date of filing: **24.11.83**

(54) Damping spacer for bundle conductors of high-voltage electric lines, with improved damping effectiveness.

(30) Priority: **30.11.82 IT 2450182**

(43) Date of publication of application:
**11.07.84 Bulletin 84/28**

(45) Publication of the grant of the patent:
**27.03.91 Bulletin 91/13**

(84) Designated Contracting States:
**AT BE CH DE FR GB LI LU NL SE**

(56) References cited:
**CH-A- 403 901**
**US-A- 3 230 295**
**US-A- 3 885 086**
**US-A- 3 904 811**

**IEEE TRANSACTIONS ON POWER APPARATUS AND SYSTEMS, vol. PAS-88, no. 5, May 1969, pages 703-709, New York, US; A.J. SAMUELSON: "American electric power 765-kV transmission line project"**

(73) Proprietor: **A. Salvi & C. S.p.a.**
**Via E. Cosenz, 32**
**I-20157 Milano(IT)**

(72) Inventor: **Diana, Giorgio**
**Via Bassini, 23**
**I-20133 Milano(IT)**

(74) Representative: **Faggioni, Giovanmaria, Dr. et al**
**Fumero-Studio Consulenza Brevetti Widenmayerstrasse 4/I**
**W-8000 München 22(DE)**

## Description

As known, the use of conductor bundles for high-voltage electric lines determines the need to dispose spacing elements - at regular intervals along the line - between the elementary conductors of a same bundle, apt to prevent said bundles from intersecting, or anyhow from overlapping.

Such a drawback may be determined by relative movements of one conductor in respect of the other - deriving from different elongations, from the action of the wind, from breaking loose of ice or snow muffs, or from other external mechanical pulses - as well as by electrodynamic effect of mutual attraction, deriving from the short circuit currents which may occur on the line.

Spacers designed to connect the sub-conductors of a same bundle should hence satisfy two opposite requirements: on one hand, they must be sufficiently flexible, so as not to damage the conductors at the connection point when they are subjected to normal stresses; on the other hand, they must be sufficiently stout in order to stand, without undergoing permanent deformation, the compressive stresses deriving from the electrodynamic effect of short circuit currents.

Several types of spacers, apt to perform this double function, are already known. Among these, there is for example the spacer described in the Italian Patent No. 834.619.

An important improvement of such spacers has been realized with the so-called "damping spacers", for instance of the type described in the Italian Patent No. 864.054. This patent actually illustrates a structure which - as well as performing the described function of keeping the sub-conductors of the bundle separated and spaced, with a differentiated behaviour according to the stresses to which the conductors are subjected - is apt to perform a function of dampening the oscillations produced on said conductors by the action of the wind.

The spacer described in this patent has a deformable elastic structure, anchored to the conductors of the bundle through connecting clamps, herein said clamps comprise rigid extensions, the free ends of which are associated to a stiff central body through at least one springing hinge element. Each hinge element has structural characteristics such as to dissipate energy when subjected to oscillations, in order to accomplish the desired dampening of said oscillations.

In the cited Italian Patent No. 864.054, each hinge element simply consists of a short length of wire rope, the ends of which are firmly fixed onto the rigid parts which it has to connect. The oscillation energy is dissipated due to the sliding friction between the single strands of the wire rope length.

Other types of damping spacers are described in IT-B-936.310. IT-B-962.511 and US-A-3.885.086; these in turn comprise a central stiff body, to which the rigid extensions of the connecting clamps are connected by way of springing hinges. Said hinges consist of a pair of mutually rotating elements, between which are interposed rubber pads, which get compressed on rotation - even to a slight extent - of one element in respect of the other, due to oscillation of the clamps in respect of the stiff central body.

Also the damping spacer described in the Italian Patent application No. 22559 A/82, in the name of the same Applicant - the description of which should be referred to for further details on the heretofore specified known technique - comprises springing hinges, incorporating rubber elements. In this structure, however, the rubber elements are not subjected to compressive stresses, but rather to shearing stresses.

In the first as well as in the second case, to the elastic deformation of the rubber elements - produced by the oscillations to which the hinges are subjected - there is associated a dissipation of energy, deriving from the mechanical hysteresis of said rubber ele ments, and to this dissipation of energy corresponds the desired damping of the oscillations.

All such known devices, though considered fairly efficient for the normal uses foreseen, have however evidenced - in the course of accurate tests - a very low damping force in the event of the bundle of conductors being subjected to low frequency oscillation movements and/or to torsional oscillation movements. In fact, in these cases - and particularly when a so-called "twin-wire" bundle is involved - the stiff central body of the spacer tends to follow the low frequency oscillation or the torsion of the bundle, determining only slightest deformations in correspondence of the hinges and thus very low damping effect.

It is also known, from CH-A-403.901 and from US-A-3.904.811 to combine counterweight masses with the spacer. It is important to note that in these patents the use of these masses is foreseen to prevent the "galopping" (vibrations from 0.01 to 0.5 Hz) of the electric line: in view of this specific function the barycenter of the total mass of the counterweights is always eccentric in respect of and anyhow quite far from the barycenter of the stiff central body. In other words the counterweight of the two known devices has an eccentric barycenter - whether it be shifted sideways, as in the case of the US-A-3.904.811, or very much downwards, as in the case of the CH-A-403.901 - and thus develops a "pendulum effect" (that is, it simply tends to bring back the device into a position of steady balance, subsequently to fully temporary oscillation), which is particularly suited to dampen the "galloping" effect mentioned heretofore. Beside, in both these patents, the counterweights are fixed essentially in a stiff way to the central body and/or to the connecting clamps of the spacer.

Another damping spacer is described in IEEE TRANSACTIONS ON POWER APPARATUS AND SYSTEMS (vol. PAS-88, no. 5, May 1969, pages 703-709, New York, by A.J.SAMUELSON). However here it is described essentially a stiff spacer, with which it is combined a known Stockbridge damper (two combined masses at the opposite ends of a messenger cable, the latter being anchored for its centre to the stiff spacer). However such a construction is complicated and in particular very expensive, for the known high cost of the Stockbridge damper.

Scope of the present invention is to realize a damping spacer particularly suited for the damping of the vibrations produced by the wind (vibrations between 5 and 100 Hz) on the single conductors of the bundle of the line. More in particular, the scope of the present invention is to eliminate the disadvantages of the above described known technique and to realize a spacer with a very simple structure, but at the same time which allows to obtain a satisfactory damping even in the case of vibrations or torsional oscillations which remain in the low part of the above said frequency field.

In a damping spacer for bundle conductors of high-voltage electric lines, comprising a stiff central body and at least two connecting clamps each anchored to a respective sub-conductor of the bundle, each clamp having a rigid extension connected to said stiff central body, through at least one springing hinge element having a hinging axis parallel to the axis of the bundle conductors, the scope of the invention is reached for the fact that the damping spacer comprises at least two rigid arms fixedly connected to the central body and outwardly projecting therefrom symmetrically from opposed sides, each arm carrying at an end an inertial mass, the barycenter of said inertial masses considered together being centered in a vertical plane parallel to the axis of the bundle of conductors and passing through the barycenter of said stiff central body, while the barycenter of respective single inertial masses are placed in relation to the barycenter of said stiff central body beyond the axes of said respective springing hinge elements.

It is important to note that, differently from the known technique, which foresees the use of eccentric counterweights, in the case of the present invention the whole of the two masses has a substantially centred barycenter, but said two masses are very far one from the other and from the centre, so as to obtain a high moment of intertia;

this arrangement has thus proved to be particularly valid for damping the vibrations produced by the persistent action of the wind.

Besides, in the case of the invention, springing hinge elements are interposed between the counterweights and the conductors or the connecting clamps, which allow a reciprocal movement in vertical direction, through which it is just realized the desired vibration damping. Also this characteristic is an important difference in respect of the known technique, which foresees, as above said, essentially a stiff connection between the counterweights and the conductors of the bundle (to be more precise, in the enbodiment according to fig. 10 in the US-A-3.904.811 hinges are provided between the central body and the connecting clamps, but these hinges allow only free movements in the longitudinal direction of the bundle of conductors, and no movement in the vertical plane.

Further characteristics and advantages of the structure according to the present invention will anyhow be more evident from the fol lowing description of a preferred embodiment, illustrated by way of example in the accompanying drawing, in which:

Fig. 1 is a diagrammatic side view of a damping spacer, to be used in a "twin-wire" bundle; and

Fig. 2 is a plan view of one of the two extremities of said spacer.

As said, the drawing illustrates the embodiment of a spacer to be used with a "twin-wire" bundle. This embodiment has been chosen, on one hand, because it places more in evidence the problems concerning the dampening of low frequency and/or torsional oscillations, with respect to bundles with more than two conductors and, on the other hand, because this is the simplest form of spacer and a technician in the field may, without any difficulty, transfer the teachings deriving therefrom to bundles with more than two conductors.

The illustrated spacer comprises a stiff central body 1, whose shape substantially corresponds to that of the central body of the spacer described in the heretofore cited patent application No. 22559 A/82; said body therefore has an elongated shape, with enlarged end partious incorporating springing hinges with rubber pads subjected to shearing stresses.

On the hinge axes 1a are mounted oscillating the extensions 2 of the clamps 3 of connection to the conductors C (shown by a dashed line).

According to the invention, on the hinge axes 1a are also mounted the rigid arms 4, carrying at their free end inertial masses 5, of preferably spherical shape.

The arms 4 are anchored to the hinge axis 1a and are furthermore housed, with their end portion connected to said hinge, into a recess 1b of the stiff body 1; said recess is apt to prevent their rotation about the axis 1a, thereby making them rigidly connected to the body 1 itself.

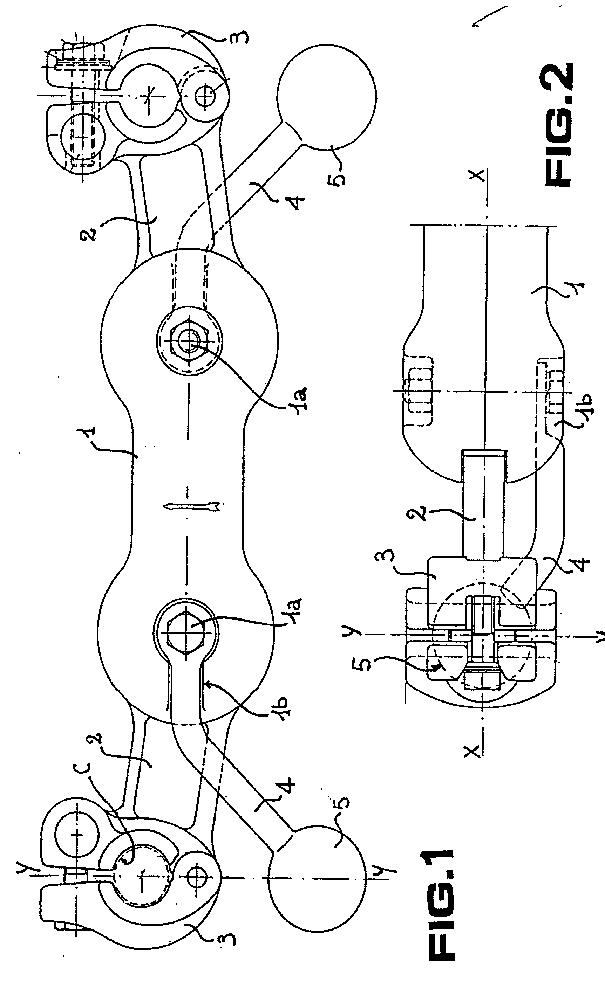

The arms 4 project outwardly from the body 1, so that the bary center of the inertial masses 5 is well beyond the axis of the corresponding hinge, in respect to the barycenter of the body 1. Preferably, the length of the arms 4 is such that the barycenter of the masses 5 lies substantially on the vertical plane Y-Y crossing the axis of the conductor C. Also preferably, the arms 4 are curved from the outside towards the center of the body 1, so that the barycenter of the masses 5 lies - as clearly shown in figure 2 - substantially on the median vertical plane X-X of the stiff body 1.

Having obtained, with this structure, to considerably increase the moment of inertia of the spacer in its whole, without however increasing its weight to an undesirable extent, it has been possible to ascertain that, in the presence of low frequency and/or torsional oscillations - during which the spacers of known technique tend to rigidly follow the movement of the conductors, without producing any oscillation of the hinges - the spacer according to the invention behaves in a fully efficient manner: the stiff body 1, thanks to its high moment of inertia, tends to keep its initial rest position and the oscillations of the conductors - even low frequency or torsional oscillations - turn into an oscillation of the extensions 2 in respect of the body 1, with deformation of the rubber elements of the hinges and consequent effective damping action.

It is anyhow understood that the invention is by no means limited to the embodiment illustrated, which has been given by mere way of example, but that there may be various other embodiments differing from the same, all within reach of a technician in the field and hence all falling within the scope of the invention itself. In particular, as already said, the invention should not be limited to spacers for "twin-wire" bundles, and even less to the use of a spacer as that described in the Patent application No. 22559 A/82; this latter has in fact been cited merely to facilitate the understanding of the invention, whose fundamental characteristics should instead be considered as applicable to any other type of spacer of known technique, and in particular to the spacers described in the other patents cited in the introductory part of this specification.

## Claims

1.  Damping spacer for bundle conductors of high-voltage electric lines, comprising a stiff central body (1) and at least two connecting clamps (3) each anchored to a respective sub-conductor (C) of the bundle, each clamp having a rigid extension (2) connected to said stiff central body (1), through at least one springing hinge element having a hinging axis (1a) parallel to the axis of the bundle conductors, characterized in that it also comprises at least two rigid arms (4) fixedly connected to the central body (1) and outwardly projecting therefrom symmetrically from opposed sides, each arm carrying at an end an inertial mass (5), the barycenter of said inertial masses considered together being centered in a vertical plane parallel to the axis of the bundle of conductors and passing through the barycenter of said stiff central body (1), while the barycenters of respective single inertial masses (5) are placed in relation to the barycenter of said stiff central body (1) beyond the axes (1a) of said respective springing hinge elements.

2.  Damping spacer as in claim 1), Wherein the barycenters of said inertial masses lie substantially on a vertical plane (y-y) parallel to the axes of the bundle conductors and passing through the axis of the corresponding sub-conductor (C).

3.  Damping spacer as in claim 1) or 2), wherein the barycenters of said inertial masses (5) lie substantially on a vertical plane (x-x) perpendicular to the axes of the conductors and forming the median plane of said central body (1).

4.  Damping spacer as in claim 1), wherein said inertial masses (5) have a substantially spherical configuration.

## Revendications

1.  Entretoise amortisseuse destinée à des conducteurs en faisceaux de lignes électriques à haute tension, comportant un corps central rigide (1) et au moins deux brides de serrage (3) ancrées chacune à un conducteur élémentaire correspondant (C) du faisceau, chaque bride possédant un prolongement rigide (2) relié audit corps central rigide (1), par l'intermédiaire d'au moins un élément de suspension formant pivot comportant un axe de pivotement (1a) parallèle à l'axe des conducteurs du faisceau, caractérisé en ce qu'elle comporte aussi au moins deux bras rigides (4) reliés de manière rigide au corps central (1) et dépassant de ce dernier vers l'extérieur symétriquement à partir de côtés opposés, chaque bras portant à une extrémité une masse (5) à inertie, le barycentre desdites masses à inertie considérées dans leur ensemble étant centré sur un plan vertical parallèle à l'axe du faisceau de conducteurs et passant par le barycentre dudit corps central rigide (1), tandis que les barycentres respectifs des masses (5) à inertie individuelle sont placés au-delà des axes (1a) desdits éléments correspondants de suspension formant pivots par rapport au barycentre dudit corps central rigide (1).

2. Entretoise amortisseuse selon la revendication 1), dans laquelle chaque barycentre desdites masses à inertie se trouve situé sensiblement dans un plan vertical (y - y) parallèle aux axes des conducteurs du faisceau et passant par l'axe du conducteur élémentaire correspondant (C).

3. Entretoise amortisseuse selon la revendication 1) ou la revendication 2), dans laquelle les barycentres desdites masses (5) à inertie se trouvent situés sensiblement dans un plan vertical (x - x) perpendiculaire aux axes des conducteurs et constituant le plan médian dudit corps central (1).

4. Entretoise amortisseuse selon la revendication 1), dans laquelle lesdites masses (5) à inertie présentent une configuration sensiblement sphérique.

**Ansprüche**

1. Dämpfender Abstandhalter für Bündelleiter von elektrischen Hochspannungsleitungen, mit einem steifen Zentralkörper (1) und wenigstens zwei Verbindungsklemmen (3), die jeweils mit einem Unterleiter (C) des Bündels verbunden sind, wobei jede Klemme eine feste, mit dem steifen Zentralkörper (1) über wenigstens ein federndes Gelenkelement, dessen Gelenkachse (1a) parallel zu der Achse der Bündel von Leitern verläuft, verbundene Extension (2) aufweist, dadurch gekennzeichnet, daß er weiter wenigstens zwei feste, fest mit dem Zentralkörper (1) und von diesem sich symmetrisch von der gegenüberliegenden Seite weg erstreckende Arme (4) aufweist, die jeweils an einem Ende eine träge Masse (5) tragen, deren Schwerpunkt bei gemeinsamer Betrachtung in einer zu der Achse des Bündels von Leitern vertikalen Ebene zentriert ist, während die Schwerpunkte der einzelnen trägen Masse (5) relativ zu dem Schwerpunkt des steifen Zentralkörpers (1) unterhalb der Achse (1a) des jeweiligen federnden Gelenkelements liegt.

2. Dämpfender Abstandhalter nach Anspruch 1, wobei die Schwerpunkte der trägen Massen im wesentlichen auf einem zu den Achsen des Bündels von Leitern parallelen und durch die Achse des entsprechenden Unterleiters verlaufende vertikalen Ebene (y-y) liegen.

3. Dämpfender Abstandhalter nach Anspruch 1 oder Anspruch 2, wobei die Schwerpunkte der trägen Masse (5) im wesentlichen auf einer zu den Achsen der Leiter senkrechten und die Medianebene des Zentralkörpers (1) bildenden vertikalen Ebene (x-x) liegen.

4. Dämpfender Abstandhalter nach Anspruch 1, wobei die träge Masse (5) im wesentlichen kugelförmig ist.

FIG.1

FIG.2

EP 0 113 035 B1